# EUROPEAN PATENT SPECIFICATION

(11) **EP 1 104 654 B1**
(45) Date of publication and mention of the grant of the patent: **10.11.2004**
(21) Application number: 00204036.8
(22) Date of filing: 16.11.2000
(51) Int. Cl.: A23L 1/23, A23L 1/238, A23J 3/34

(54) **Production of hydrolysate seasoning**
Verfahren zur Herstellung eines Gewürzes aus hydrolisiertem Protein
Procédé de production d' un assaisonnement à base de protéine hydrolysé

(30) Priority: 02.12.1999 SG 9906087
(43) Date of publication of application: 06.06.2001
(73) Proprietor: Givaudan S.A., 1214 Vernier (CH)
(72) Inventor: LIM, Bee Gim, 640426 Singapore (SG); Ho Dac, Thang, 1052 Le Mont s/Lausanne (CH)
(74) Representative: McStea, John Anthony

(56) References cited:
- EP-A- 0 824 873
- EP-A- 0 829 205
- EP-A- 0 922 395
- DATABASE WPI Section Ch, Week 77352 Derwent Publications Ltd., London, GB; Class D13, AN 1973-81332u XP002161719 & JP 48 043637 B (NODA SANGYO KAGAKU KENKYU), 19 March 1969 (1969-03-19)
- NISHIJIMA H ET AL: "Salt-limited soy sauce. I. Production of the salt-limited soy sauce by a fermentation method." JOURNAL OF THE SOCIETY OF BREWING, JAPAN ((NIHON JOZO KYOKAI ZASSHI)) 1976 TOKYO UNIV. AGRIC., SETAGAYA-KU, TOKYO, JAPAN, vol. 71, no. 12, pages 960-965, XP000989748

## Description

### FIELD OF THE INVENTION

The present invention relates to a process for the production of a hydrolysate seasoning, more particularly to the production of hydrolysate seasoning by the biological hydrolysis of a protein containing material.

### BACKGROUND OF THE INVENTION

In our co-pending EP-A-0824873, we described a process for the production of a seasoning which comprises preparing a fermented protein koji from a protein containing material and a carbohydrate, hydrolysing the fermented protein koji at a temperature between 15°C and 60°C and a pH of from 4.5 to 10 for a period of from 6 hours to 28 days characterised in that inoculation with a culture of a lactic acid bacteria at an inoculation density of from 10³ to 10⁷ cfu/g of fermented protein koji is carried out either in the fermented protein koji stage or in the hydrolysis stage. The purpose of the lactic acid bacteria is to inhibit the growth of contaminating bacteria and protect the koji from abnormal fermentation and putrefaction caused by such contaminating bacteria.

Some lactic acid bacteria e.g. *Lactobacillus sake* (*L.sake*) produce peptidases and fiber hydrolysing enzymes. API ZYM kit has been used to detect enzymatic activities produced by the lactic acid bacteria such as phosphatases, lipases, aminopeptidases (leucyl-, valyl-, cystyl-)_{,} protease (chymotrypsin) and carbohydrases (galactosidase, glucosidase, N-acetyl-β-glucosaminidase). However they do not produce glutaminase activity extracellularly. Among the carbohydrases that are produced, N-acetyl-β-glucosaminidase is a fiber hydrolysing enzyme. The substrate of this enzyme, N-acetyl-β-glucosamine, is commonly found in chitin. In other words, these lactic acid bacteria produce Chitinase capable of degrading the polysaccharide chains of fungal cell walls. When API 50 CHL is used in the characterisation of these lactic acid bacteria, it is shown that they are able to break down Mannose, Rhamnose, N-acetyl-β-glucosamine, Melibiose, Saccharose, Trehalose, β-Gentiobiose and Gluconate. All these are carbohydrates commonly found in plant cell wall. Among them, Gluconase is also a fungal cell wall degrading enzyme These properties make such lactic acid bacteria a valuable source of proteolytic and fiber hydrolysing enzymes in addition to its protective behaviour.

### SUMMARY OF THE INVENTION

We have found that, in the production of a hydrolysate seasoning, by hydrolysing a protein containing material substrate with enzymes containing proteolytic activities and fiber hydrolysing activities, a surprising improvement in the organoleptic properties of the seasoning was observed. This improvement may be achieved with or without the preparation of koji and/or in the presence or absence of lactic acid bacteria.

Accordingly, the present invention provides a process for the production of a hydrolysate seasoning which comprises hydrolysing a protein containing material substrate with enzymes containing proteolytic activities and fiber hydrolysing activities.

### DETAILED DESCRIPTION OF THE INVENTION

The protein containing material substrate may be a plant protein material such as soya, wheat germ, corn gluten, rice gluten, wheat gluten, etc. or it may be a fermented protein koji prepared from the protein containing material and a carbohydrate, for example, by fermenting one or more protein containing materials together with a carbohydrate with a culture of Aspergillus oryzae and/or Aspergillus sojae. The carbohydrate may be, for instance, wheat flour, roasted wheat or wheat bran.

When the protein containing material is a gluten which will undergo a koji fermentation, it is advantageously used as a substrate in the form of pellets, by forming a dough which comprises adding water to a dried gluten in an amount of from 19 to 60% by weight based on the weight of the dough, pelletising the dough and, if necessary, adding water to adjust the moisture content to from 35 to 60% by weight based on the weight of the pellets before sterilising the pellets by steam treatment. The preparation of the pellets as substrate support for Koji fermentation from the above raw materials and the conditions for koji fermentation are described in our copending SG-A-9800488-0.

The protein containing material is a substrate which may contain from 30 to 100% of protein, preferably from 70 to 90% of protein.

If desired, the protein containing material substrate may be inoculated with a lactic acid bacteria for protective purposes. The lactic acid bacteria may be, for instance, *L. sake, L. brevis, L. casei, L. curvatus, L. pentosus, L. plantarum, L. pentosaceus*.

The source of the enzyme containing proteolytic activities may be microorganisms such as bacteria, fungi or yeasts, etc., for instance the enzyme may be the enzyme produced during koji fermentation, the proteolytic enzymes produced by the lactic acid bacteria used to inoculate the protein material substrate, a technical proteolytic enzyme, or it may be a combination of two or more of these enzymes. The technical enzyme may be, for instance, a protease, peptidase or glutaminase (e.g. Alcalase and Flavorzyme from Novo Nordisk, Glutaminese from Amano Pte Lte). Technical enzymes are generally enzymes that have been isolated and purified to remove interfering activities which would be detrimental to processing. The technical enzyme containing proteolytic activities may be added to the plant protein substrate prior to koji fermentation or it may be added to the hydrolysate.

The source of the enzyme containing fiber hydrolysing activities may be microorganisms such as bacteria, fungi or yeasts, etc., for instance it may be the small amount of fiber hydrolysing enzyme produced during koji fermentation, the fiber hydrolysing enzymes produced by the lactic acid bacteria used to inoculate the protein material substrate, a technical fiber hydrolysing enzyme, or it may be a combination of two or more of these sources. The technical fiber hydrolysing enzyme may be, for instance, Hemicellulase from Amano Pte Ltd, Celluclast from Novo Nordisk, or Depol 40L from Biocatalyst Pte Ltd. The enzyme containing fiber hydrolysing activities may be added to the plant protein substrate prior to koji fermentation, or it may be added to the hydrolysate.

Among the protein substrates, corn gluten has the most significant improvement of the hydrolysis yield using an enzyme that possesses the fiber hydrolysing enzyme activity. Corn gluten contains a high percentage of carbohydrates (16.5%) and fibers (5.7%). These complex carbohydrates form an intact membrane where corn proteins are found within. The masking effect of the carbohydrate network greatly affects the accessibility of the corn protein by proteases or peptidases. To increase the accessibility of the corn protein, it is therefore necessary to break down the carbohydrate membrane by fiber hydrolysing enzymes. Although not wishing to be bound by theory, for the koji system, it is thought that these fiber hydrolysing enzymes hydrolyse the cell walls of the *Aspergillus* mycelia in koji, causing the release of intracellular koji peptidases and glutaminases into the hydrolysate. These extracellular peptidases and glutaminases would definitely be more efficient, leading to an increase in formol nitrogen and glutamic acid yields.

The hydrolysis of the protein containing material substrate may be carried out at a temperature from 2° to 65°C at a pH from 4.5 to 10 for a period of from 6 hours to 28 days, e.g. as described in EP 0640294 or our co-pending patent applications EP-A-0829205, EP-A-0824873 or EP-A-0913097. In the latter two applications, inoculation with a culture of a lactic acid bacteria at an inoculation density of from 10³ to 10⁷ cfu/g of fermented protein koji is carried out either in the fermented protein koji stage or in the hydrolysis stage. In the present invention, inoculation in the protein containing material substrate with a culture of a lactic acid bacteria at an inoculation density of from 10³ to 10⁹ cfu/g of protein containing material may be carried out either in the fermented protein koji stage or in the hydrolysis stage. The hydrolysis is preferably carried out at a temperature between 15°C and 37°C for a period of from 12hr to 5 days, and more preferably at a temperature between 37°C and 55°C for a period of from 8hr to 2 days. Advantageously, the hydrolysis is carried out at a pH of from 4.5 to 7.5. The hydrolysis may be carried out in the absence or presence of salt, and when salt is present, the amount of salt may be up to 100% by weight based on the weight of the protein material.

After the hydrolysis, the hydrolysed protein material may be pressed to separate a liquid sauce from a solid residue. The liquid sauce is advantageously pasteurised e.g. at a temperature of from 90° to 140°C for a period of from 15 seconds to 30 minutes and then filtered to give a liquid seasoning. If desired, salt may be added either before or after pressing or filtering to give a product having a salt content of 0-60% by weight based on the weight of dried matter. If desired, the liquid sauce may be made into a powder for instance, by concentration, then dried, e.g. vacuum dried to a low moisture content and finally milled into a powder to give a solid seasoning.

### EXAMPLES

The following Examples further describe the present invention.

### Example 1

Water was added directly to a mixture of corn gluten (6.04kg), wheat flour (2.16kg) and wheat bran (0.43kg) to obtain a moisture content of 45%. The dough formed was fed into a mincer to form cylindrical pellets each having a diameter of 4mm and a length of 10mm. Additional moisture was introduced to the pellets such that the moisture content of the pellets was 47% by weight.

The pellets were heated to 100°C and held at the same temperature for 10 minutes and cooled to below 40°C. The cooked extrudates were mixed with a liquid suspension of 2.5g of *Aspergillus oryzae* spores inoculum and 10 g of a culture of *L. sake* at 10⁹ cfu/g .The technical hemicellulase enzyme, Hemicellulase from Amano Pte Ltd ( activity= 90,000u/g ), was added at a concentration of 0.43% of weight of cooked extrudate.

During the 42 hours of Koji fermentation, the following temperature profiles were maintained for the culture bed:

| | |
|---|---|
| 0 - 25 hours | 30°C |
| 25 - 42 hours | 27°C |

The Koji was mixed at 18th and 25th hours to ensure sufficient airflow through the culture bed for good ventilation. After the koji fermentation, the matured koji was harvested. Hydrolysis was carried out in a hydrolysis tank by adding water to obtain a hydrolysate with a total solid of 18%m/m. The hydrolysis was carried out at 35°C for 48 hours and the pH was kept constant at 6.0 with addition of a 40% NaOH solution.

The corn gluten hydrolysed product has a high glutamic acid content of 1.01%m/m. The hydrolysed product was pressed to separate corn gluten sauce from solid residue. Salt was added to the level of 15% m/m before pressing. The corn gluten sauce was heat treated at 90°C for 20 minutes. The liquid sauce was concentrated by evaporation. The concentrate obtained was dried in a vacuum oven and milled into powder.

For organoleptic evaluation, 12.5g of liquid sauce or 3.5g of powder were diluted with 250 ml of boiling water. In both cases, a tasting panel of 8 experienced tasters found the product to have a better body than a product without the addition of the technical hemicellulase enzyme to the cooked extrudates.

### Example 2

A similar procedure was carried out as example 1 except that the technical hemicellulase enzyme was added to the hydrolysate at a concentration of 0.25% of the weight of hydrolysate during hydrolysis instead of to the cooked extrudates before koji fermentation. The corn gluten hydrolysed product thus produced also has a high glutamic acid content of 0.97%m/m. For organoleptic evaluation, 12.5g of liquid sauce or 3.5g of powder were diluted with 250 ml of boiling water. In both cases, a tasting panel of 8 experienced tasters found the product to have a better body than a product without the addition of the technical hemicellulase enzyme.

### Example 3

220kg of water was heated up to 35°C in a reactor. 60 kg of corn gluten powder was added into the water with stirring. 380g of technical protease enzyme, Flavourzyme 2.4L (from Novo Nordisk) were added into the hydrolysate. *L. sake* culture was also inoculated in the hydrolysate such that a count of 10⁶cfu/ml was obtained. Temperature and pH were controlled at 35°C and 6.0 respectively, for 48 hours. The hydrolysed product produced this way was found to have a higher glutamic acid (0.4%m/m) compared to the product without the inoculation of *L.sake* (0.2%m/m).

The hydrolysate was further processed as in example 1 to produce corn gluten sauce powder. A better microbiological quality during hydrolysis was also achieved compared to the product without the inoculation of *L. sake.* A tasting panel of 8 experienced tasters found the product to have a better body than a product without the addition of *L.sake.*

### Example 4

A similar procedure was carried out as example 3 except that 380g of technical protease enzyme, Flavourzyme 2.4L (from Novo Nordisk) and 700g of technical hemicellulase enzyme, Hemicellulase from Amano Pte Ltd ( activity= 90,000u/g), was added in the hydrolysate at the onset of hydrolysis. The corn gluten hydrolysed product thus produced has a high glutamic acid content of 0.83%m/m. A tasting panel of 8 experienced tasters found the product to have a better body than a product without the addition of the technical hemicellulase enzyme, i.e. an even better body to that of the product of example 3 due to the presence of further fiber hydrolysing enzyme, hemicellulase in addition to that derived from the *L.sake*.

### Example 5

A similar procedure was carried out as in example 1 except that the koji was produced based on wheat gluten instead of corn gluten and that technical hemicellulase enzyme, Hemicellulase from Amano Pte Ltd (activity = 90,000u/g), was added to the hydrolysate at a concentration of 0.25% of the weight of hydrolysate at the onset of hydrolysis. Wheat gluten powder, at a ratio of 7:3 to the wheat gluten koji was added in the hydrolysate during the hydrolysis. The water quantity was adjusted such that the hydrolysate has a total solid of 18%m/m.

The hydrolysed product was found to have a higher glutamic acid (2.10%m/m) and formol nitrogen (0.95%m/m) compared to the product without the inoculation of the technical hemicellulase enzyme (1.76%m/m and 0.88%m/m respectively). A tasting panel of 8 experienced tasters found the product to have a better body than a product without the addition of the technical hemicellulase enzyme.

### Example 6

A similar procedure was carried out as example 5 except that fiber hydrolysing enzyme was not added, corn gluten powder was added in the hydrolysate instead of wheat gluten powder and the ratio of koji to powder was 7:3 instead of 3:7. 380g of technical protease enzyme, Flavourzyme 2.4L (from Novo Nordisk) and 380g of technical protease enzyme, Alcalase 1.5L (from Novo Nordisk) were also added into the hydrolysate at the onset of hydrolysis. The hydrolysed product thus produced has a high glutamic acid content of 1.83%m/m.

A tasting panel of 8 experienced tasters found the product to have a better body than a product without the addition of the *L.sake* as the source of the fiber hydrolysing enzyme.

### Example 7

A similar procedure was carried out as example 1 except that the culture of *L. sake* was omitted.

A tasting panel of 8 experienced tasters found the product to have a better body than a product without the addition of the technical hemicellulase enzyme.

## Claims

1. A process for the production of a hydrolysate seasoning which comprises hydrolysing a protein containing material substrate with enzymes containing proteolytic activities and fiber hydrolysing activities.

2. A process according to claim 1 wherein the protein containing material substrate is soya, wheat germ, corn gluten, rice gluten or wheat gluten.

3. A process according to claim 1 wherein the protein containing material substrate is a fermented protein koji prepared from the protein containing material and a carbohydrate.

4. A process according to claim 3 wherein the fermented protein koji is prepared by fermenting one or more protein containing materials together with a carbohydrate with a culture of Aspergillus oryzae and/or Aspergillus sojae.

5. A process according to claim 1 wherein the enzyme containing proteolytic activities is derived from bacteria, fungi or yeasts.

6. A process according to claim 1 wherein the enzyme containing proteolytic activities is the enzyme produced during koji fermentation, the proteolytic enzymes produced by the lactic acid bacteria used to inoculate the protein material substrate, a technical proteolytic enzyme, or a combination of two or more of these enzymes.

7. A process according to claim 1 wherein the enzyme containing fiber hydrolysing activities is derived from bacteria, fungi, or yeasts.

8. A process according to claim 1 wherein the enzyme containing fiber hydrolysing activities is a fiber hydrolysing enzyme produced during koji fermentation, the fiber hydrolysing enzymes produced by the lactic acid bacteria used to inoculate the protein material substrate, a technical fiber hydrolysing enzyme, or it may be a combination of two or more of these enzymes.

9. A process according to claim 1 wherein the enzyme containing proteolytic activity is added to the plant protein substrate before koji fermentation or to the hydrolysate.

10. A process according to claim 1 wherein the fiber hydrolysing enzyme is added to the plant protein substrate before koji fermentation or to the hydrolysate.

11. A process according to claim 1 wherein the hydrolysis of the protein containing material substrate is carried out at a temperature from 2° to 65°C at a pH from 4.5 to 10 for a period of from 6 hours to 28 days.

12. A process according to claim 1 wherein a culture of a lactic acid bacteria is inoculated in the protein containing material substrate at an inoculation density of from 10³ to 10⁹ cfu/g of protein containing material either in the fermented protein koji stage or in the hydrolysis stage.

13. A process according to claim 1 wherein the hydrolysis is carried out at a temperature between 15°C and 37°C for a period of from 12hr to 5 days.

14. A process according to claim 1 wherein the hydrolysis is carried out at a temperature between 37°C and 55°C for a period of from 8hr to 2 days.

15. A process according to claim 1 wherein the hydrolysis is carried out at a pH of from 4.5 to 7.5.

16. A process according to claim 1 wherein the hydrolysis of the protein material is carried out in the absence or presence of salt.

17. A process according to claim 16 wherein when salt is present, the amount is up to 100% by weight based on the weight of the protein material

18. A process according to claim 1 wherein, after the hydrolysis, the hydrolysed protein material is pressed to separate a liquid sauce from a solid residue.

19. A process according to claim 18 wherein the liquid sauce is pasteurised at a temperature of from 90° to 140°C for a period of from 15 seconds to 30 minutes and then filtered to give a liquid seasoning.

20. A process according to claim 19 wherein when salt is absent during the hydrolysis, salt is added either before or after pressing to give a product having a salt content of 0-60% by weight based on the weight of dried matter.

21. A process according to claim 20 wherein the liquid sauce is made into a powder by concentration, then dried to a low moisture content and finally milled into a powder to give a solid seasoning.

22. A process for the preparation of a dry hydrolysate for use as a base for an aromatisation agent in culinary products which comprises drying the paste obtained according to claim 21 to a residual water level of up to 2%.

23. A hydrolysate seasoning obtainable by a process according to any of the preceding claims.

## Patentansprüche

1. Verfahren zur Herstellung einer Hydrolysat-Würze, das die Hydrolyse eines Protein enthaltenden Materialsubstrats mit Enzymen, die proteolytische Aktivitäten und Fasern hydrolysierende Aktivitäten aufweisen, umfaßt.

2. Verfahren nach Anspruch 1, wobei das Protein enthaltende Materialsubstrat Soja, Weizenkeim, Maisgluten, Reisgluten oder Weizengluten ist.

3. Verfahren nach Anspruch 1, wobei das Protein enthaltende Materialsubstrat ein fermentierter Protein-Koji ist, der aus dem Protein enthaltenden Material und einem Kohlenhydrat hergestellt ist.

4. Verfahren nach Anspruch 3, wobei der fermentierte Protein-Koji dadurch hergestellt wird, daß man eines oder mehrere Protein enthaltende Materialien zusammen mit einem Kohlenhydrat mit einer Kultur von Aspergillus oryzae und/oder Aspergillus sojae fermentiert.

5. Verfahren nach Anspruch 1, wobei das Enzym, das proteolytische Aktivitäten aufweist, sich von Bakterien, Pilzen oder Hefen ableitet.

6. Verfahren nach Anspruch 1, wobei das Enzym, das proteolytische Aktivitäten aufweist, von dem während der Koji-Fermentation hergestellten Enzym, den proteolytischen Enzymen, die durch Milchsäurebakterien erzeugt werden, die zur Beimpfung des Proteinmaterialsubstrats verwendet werden, einem technischen proteolytischen Enzym oder einer Kombination von zwei oder mehr dieser Enzyme gebildet wird.

7. Verfahren nach Anspruch 1, wobei das Enzym, das Fasern hydrolysierende Aktivitäten aufweist, sich von Bakterien, Pilzen oder Hefen ableitet.

8. Verfahren nach Anspruch 1, wobei das Enzym, das Fasern hydrolysierende Aktivitäten aufweist, von einem Fasern hydrolysierenden Enzym, das während der Koji-Fermentierung erzeugt wird, Fasern hydrolysierenden Enzymen, die von den Milchsäurebakterien erzeugt werden, die zur Beimpfung des Proteinmaterialsubstrats verwendet werden, einem technischen Fasern hydrolysierenden Enzym oder einer Kombination von zwei oder mehr dieser Enzyme gebildet wird.

9. Verfahren nach Anspruch 1, wobei das Enzym, das proteolytische Aktivität aufweist, dem Pflanzenproteinsubstrat vor der Koji-Fermentierung oder dem Hydrolysat zugesetzt wird.

10. Verfahren nach Anspruch 1, wobei das Fasern hydrolysierende Enzym dem Pflanzenproteinsubstrat vor der Koji-Fermentierung oder dem Hydrolysat zugesetzt wird.

11. Verfahren nach Anspruch 1, wobei die Hydrolyse des Protein enthaltenden Materialsubstrats bei einer Temperatur von 2 bis 65°C bei einem pH von 4,5 bis 10 für einen Zeitraum von 6 Stunden bis 28 Tagen durchgeführt wird.

12. Verfahren nach Anspruch 1, wobei das Protein enthaltende Materialsubstrat mit einer Kultur von Milchsäurebakterien mit einer Beimpfungsdichte von 10³ bis 10⁹ KBE/g des Protein enthaltenden Materials entweder auf der Stufe des fermentierten Protein-Koji oder auf der Hydrolysestufe beimpft wird.

13. Verfahren nach Anspruch 1, wobei die Hydrolyse bei einer Temperatur zwischen 15°C und 37°C für einen Zeitraum von 12 Stunden bis 5 Tagen durchgeführt wird.

14. Verfahren nach Anspruch 1, wobei die Hydrolyse bei einer Temperatur zwischen 37°C und 55°C für einen Zeitraum von 8 Stunden bis 2 Tagen durchgeführt wird.

15. Verfahren nach Anspruch 1, wobei die Hydrolyse bei einem pH von 4,5 bis 7,5 durchgeführt wird.

16. Verfahren nach Anspruch 1, wobei die Hydrolyse des Proteinmaterials in Abwesenheit oder in Gegenwart von Salz durchgeführt wird.

17. Verfahren nach Anspruch 16, wobei dann, wenn Salz anwesend ist, dessen Menge bis zu 100 Gew.-%, bezogen auf das Gewicht des Proteinmaterials, beträgt.

18. Verfahren nach Anspruch 1, wobei nach der Hydrolyse das hydrolysierte Proteinmaterial ausgepreßt wird, um eine flüssige Sauce von einem festen Rückstand abzutrennen.

19. Verfahren nach Anspruch 18, wobei die flüssige Sauce bei einer Temperatur von 90°C bis 140°C für einen Zeitraum von 15 Sekunden bis 30 Minuten pasteurisiert und dann filtriert wird, um eine flüssige Würze zu erhalten.

20. Verfahren nach Anspruch 19, wobei dann, wenn während der Hydrolyse kein Salz anwesend ist, Salz entweder vor oder nach dem Auspressen zugesetzt wird, um ein Produkt mit einem Salzgehalt von 0 bis 60 Gew.-%, bezogen auf das Gewicht der Trockensubstanz, zu erhalten.

21. Verfahren nach Anspruch 20, wobei die flüssige Sauce dadurch in ein Pulver überführt wird, daß man sie konzentriert, dann auf einen niedrigen Feuchtigkeitsgehalt trocknet und schließlich zu einem Pulver vermahlt, um eine feste Würze zu erhalten.

22. Verfahren zur Herstellung eines trocknen Hydrolysats zur Verwendung als Basis für ein Aromatisierungsmittel in Küchenprodukten, das das Trocknen der nach Anspruch 21 erhaltenen Paste auf einen Restwassergehalt von bis zu 2 % umfaßt.

23. Hydrolysat-Würze, die nach einem Verfahren nach irgendeinem der vorausgehenden Ansprüche erhältlich ist.

## Revendications

1. Procédé de préparation d'un assaisonnement à base d'hydrolysat, comprenant l'hydrolyse d'un substrat à base d'une matière contenant des protéines avec des enzymes contenant des activités protéolytiques et des activités d'hydrolyse de fibres.

2. Procédé selon la revendication 1, dans lequel le substrat à base de matière contenant des protéines est du soja, des germes de blé, du gluten de maïs, du gluten de riz ou du gluten de blé.

3. Procédé selon la revendication 1, dans lequel le substrat à base de matière contenant des protéines est un koji fermenté de protéines préparé à partir de la matière contenant des protéines et d'un glucide.

4. Procédé selon la revendication 3, dans lequel le koji fermenté de protéines est préparé par fermentation d'une ou plusieurs matières contenant des protéines conjointement avec un glucide avec une culture d'*Aspergillus oryzae* et/ou d'*Aspergillus sojae*.

5. Procédé selon la revendication 1, dans lequel l'enzyme contenant des activités protéolytiques provient de bactéries, de champignons ou de levures.

6. Procédé selon la revendication 1, dans lequel l'enzyme contenant des activités protéolytiques est l'enzyme produite pendant la fermentation de koji, les enzymes protéolytiques produites par les bactéries lactiques utilisées pour inoculer le substrat à base de matière protéinique, une enzyme protéolytique technique ou une combinaison de deux ou de plus de deux de ces enzymes.

7. Procédé selon la revendication 1, dans lequel l'enzyme contenant des activités d'hydrolyse des fibres provient de bactéries, de champignons ou de levures.

8. Procédé selon la revendication 1, dans lequel l'enzyme contenant des activités d'hydrolyse des fibres est une enzyme hydrolysant les fibres produite pendant la fermentation de koji, les enzymes hydrolysant les fibres produites par les bactéries lactiques utilisées pour inoculer le substrat à base de matière protéinique, une enzyme technique hydrolysant les fibres, ou elle peut être une combinaison de deux ou de plus de deux de ces enzymes.

9. Procédé selon la revendication 1, dans lequel l'enzyme contenant une activité protéolytique est ajoutée au substrat protéinique végétal avant la fermentation de koji ou à l'hydrolysat.

10. Procédé selon la revendication 1, dans lequel l'enzyme hydrolysant les fibres est ajoutée au substrat protéinique végétal avant la fermentation de koji ou à l'hydrolysat.

11. Procédé selon la revendication 1, dans lequel on effectue l'hydrolyse du substrat à base de matière contenant des protéines à une température de 2°C à 65°C et à un pH de 4,5 à 10 pendant une durée de 6 heures à 28 jours.

12. Procédé selon la revendication 1, dans lequel on inocule une culture de bactéries lactiques dans le substrat à base de matière contenant des protéines à une densité d'inoculation de 10³ à 10⁹ ufc/g de matière contenant des protéines, soit au stade du koji fermenté de protéines, soit au stade de l'hydrolyse.

13. Procédé selon la revendication 1, dans lequel on effectue l'hydrolyse à une température comprise entre 15°C et 37°C pendant une durée de 12 h à 5 jours.

14. Procédé selon la revendication 1, dans lequel on effectue l'hydrolyse à une température comprise entre 37°C et 55°C pendant une durée de 8 h à 2 jours.

15. Procédé selon la revendication 1, dans lequel on effectue l'hydrolyse à un pH de 4,5 à 7,5.

16. Procédé selon la revendication 1, dans lequel on effectue l'hydrolyse de la matière protéinique en l'absence ou en présence d'un sel.

17. Procédé selon la revendication 16, dans lequel, quand un sel est présent, sa quantité vaut jusqu'à 100 % en poids par rapport au poids de la matière protéinique.

18. Procédé selon la revendication 1, dans lequel, après l'hydrolyse, on presse la matière protéinique hydrolysée pour séparer une sauce liquide d'un résidu solide.

19. Procédé selon la revendication 18, dans lequel on pasteurise la sauce liquide à une température de 90°C à 140°C pendant une durée de 15 secondes à 30 minutes et ensuite on la filtre pour obtenir un assaisonnement liquide.

20. Procédé selon la revendication 19, dans lequel, quand un sel est absent pendant l'hydrolyse, on ajoute un sel avant ou après le pressage pour obtenir un produit ayant une teneur en sel de 0 à 60 % en poids par rapport au poids de la matière séchée.

21. Procédé selon la revendication 20, dans lequel on transforme la sauce liquide en une poudre par concentration, ensuite on la sèche jusqu'à l'obtention d'une faible teneur en humidité et enfin on la broie en une poudre pour obtenir un assaisonnement solide.

22. Procédé de préparation d'un hydrolysat sec à utiliser en tant que base pour un agent aromatisant dans des produits culinaires, comprenant le séchage de la pâte obtenue selon la revendication 21 jusqu'à un taux résiduel d'eau allant jusqu'à 2 %.

23. Assaisonnement à base d'hydrolysat pouvant être obtenu au moyen d'un procédé selon l'une quelconque des revendications précédentes.
